# EUROPEAN PATENT SPECIFICATION

(11) **EP 0 705 300 B1**
(45) Date of publication and mention of the grant of the patent: **04.03.1998**
(21) Application number: 93918106.1
(22) Date of filing: 12.08.1993
(51) Int. Cl.: C08K 3/00, C08L 67/06

(54) **PROCESS FOR PREPARING CERAMIC-LIKE MATERIALS AND THE CERAMIC-LIKE MATERIALS**
KERAMIKARTIGES MATERIAL UND VERFAHREN ZU SEINER HERSTELLUNG
PROCEDE DE PREPARATION DE MATERIAUX DE TYPE CERAMIQUE, ET MATERIAUX DE TYPE CERAMIQUE OBTENUS

(30) Priority: 25.06.1993 PL 29947293
(43) Date of publication of application: 10.04.1996
(73) Proprietor: Cyrkiewicz, Marceli, PL-90-146 Lodz (PL); Herling, Erwin, New York, NY 10021 (US); Kleszczewski, Jacek, PL-94-115 Lodz (PL)
(72) Inventor: Cyrkiewicz, Marceli, PL-90-146 Lodz (PL); Herling, Erwin, New York, NY 10021 (US); Kleszczewski, Jacek, PL-94-115 Lodz (PL)
(74) Representative: Grünecker, Kinkeldey, Stockmair & Schwanhäusser Anwaltssozietät
(86) International application number: PCT/PL93/00012
(87) International publication number: WO 95/00583

(56) References cited:
- US-A- 3 873 492
- CHEMICAL ABSTRACTS, vol. 110, no. 11, 29 May 1989, Columbus, Ohio, US; abstract no. 198189z, W.F.CHANG WT AL. 'STABILIZATION OF PHOSPHOGYPSUM WITH EPOXY' page 344 ; & PROCEEDINGS OF THE INTERNATIONAL CONFERENCE ON PHOSPHGYPSUM no. 2 , 1988 , CHINA pages 287 - 300 XP57029
- CHEMICAL ABSTRACTS, vol. 101, no. 12, 17 September 1984, Columbus, Ohio, US; abstract no. 96679f, 'FOAMED GYPSUM BOARDS' page 345 ; & JP,A,5 954 658 (AIN ENGINEERING KK) 29 March 1984
- DATABASE WPI Week 8716, Derwent Publications Ltd., London, GB; AN 87-112152 & JP,A,62 057 456 (SHOWA) & PATENT ABSTRACTS OF JAPAN vol. 11, no. 251 (C-440)14 August 1987 & JP,A,62 057 456 (SHOWA) 13 March 1987

## Description

The present invention is concerned with a process for preparing materials having ceramic-like properties and the materials having ceramic-like properties produced thereby suitable for manufacturing articles with magnetic properties as well as products absorbing hard and X-radiations and also goods with insulating properties useful particularly in the building industry due to their very low moisture absorbability.

There are known various processes of binding inorganic fillers, including phosphogypsum, with synthetic polymers in aqueous systems, as is shown in Polish patent specifications 113 573 and 147 599, to prepare compositions to be used as flooring or raw materials for making stuccoes. The drawback of theses processes is that the resultant products are rather brittle and porous and therefore showing a high water absorption. On the other hand, the polymerization process involved proceeds rather slowly, which excludes the use of extrusion or injection moulding methods. There is also known from Polish patent application no. P. 283 240 a process for manufacturing a ceramic-like plastics by binding a waste phosphogypsum with polyester resin in non-aqueous systems containing an accelerant, a curing agent and, in case of need, acetone. The resultant material is suitable for processing into various articles by extrusion or injection moulding and is characterized by a good mechanical strength as well as low water and oil absorbabilites.

It has unexpectedly turned out that the use of a composite inorganic filler consisting of a waste phosphogypsum, especially apatite derived phosphogypsum, and other inorganic compounds such as metal oxides or salts, in the form of a physically homogenized composition with a grain size not exceeding 25 µm, and binding this filler with unsaturated polyester resins in a non-aqueous system, makes it possible to prepare materials having ceramic-like properties with specific properties, which can be easily moulded, also by casting, and machine processed. It has also turned out that by adding a CO₂ producing substance to the composition of a waste phosphogypsum and an unsaturated polyester resin, one can prepare an expanded material having ceramic-like properties

The invention relates to a process for preparing a material having ceramic-like properties with magnetic properties by binding an inorganic filler with a synthetic resin in a non-aqueous system, **characterized in that** the process is carried out in several stages, wherein at the first stage waste phosphogypsum is heated at a temperature not lower than 177° C for at least 1 hour, and at the second stage, a physically homogenized dry composition with a grain size of up to 25µm is prepared from the waste phosphogypsum and magnetite in volume proportion 1:0.66-1:1.52, and then the resultant dry composition is blended on continuous stirring for 0.2-4.8 hours with unsaturated polyester resin in volume proportion 0.46:1-2.2:1 in relation to the dry composition, and up to 8 volume parts of an accelerant such as cobalt naphthenate per every 100 volume parts of resin is added, and at the third step the whole composition is cured by adding a curing agent in a quantity of 3-20 volume parts.

In the preferred embodiment of the process, prior to curing up to 23 parts by volume of an organic dilutant such as acetone or styrene are added to the composition to maintain the composition viscosity at a level not higher than 4,230 mPa ∗ seconds.

Furthermore, it is preferred that the curing agent is a solution of 20-40% by volume of cyclohexanone peroxide or or benzoyl peroxide in dibutyl phthalate to obtain, after the termination of the polymerization, a material having ceramic-like properties with magnetic properties.

The material having ceramic-like properties with magnetic properties, containing an inorganic filler, a synthetic resin, according to the present invention, after curing per every 50 volume parts of phosphogypsum contains 33-76 volume parts of magnetite, 46-220 volume parts of a cured unsaturated polyester resin and up to 23 volume parts of acetone or styrene.

The invention also relates to a process for preparing a material having ceramic-like properties and capable to absorb an X-radiation of 45-55keV and a hard radiation of 0.6-1.25MeV, by binding an inorganic filler with a synthetic resin in a non-aqueous system, **characterized in that** the process is carried out in several stages, wherein at the first stage waste phosphogypsum is heated at a temperature not lower than 177° C for at least 1.2 hours, and at the second stage, a physically homogenized dry composition with a grain size of up to 25µm is prepared from the waste phosphogypsum and glass-forming oxides in a volume proportion of 1:0.76-1:1.42, said oxides including 81% by weight of lead oxide, 11.5% by weight of silicon dioxide and 2.6% by weight of barium oxide, and then the resultant dry composition is blended on continuous stirring for at least 10 minutes with unsaturated polyester resin in volume proportion 0.46:1-2.2:1 in relation to the dry composition, and up to 8 volume parts of an accelerant such as cobalt naphthenate per every 100 volume parts of resin is added, and at the third stage the whole composition is cured by adding a curing agent in a quantity of 3-20 volume parts.

According to a preferred embodiment of the process, prior to curing up to 23 parts by volume of an organic dilutant such as acetone or styrene are added to the composition to maintain the composition viscosity at a level not higher than 4,230 mPa ∗ seconds.

Furthermore, it is preferred that the curing agent is a solution of 20-40% by volume of cyclohexanone peroxide or benzoyl peroxide in dibutyl phthalate to obtain, after the termination of the polymerization, a radiation absorbing material having ceramic-like properties.

A plate made from this material with a thickness of 25 mm is characterized by ability to absorb X-radiation of 45-55 keV similarly as a lead plate with a thickness of 1.1 mm as well as a hard radiation of 0.6-1.25 MeV similarly as a lead plate with a thickness of 6.5 mm.

The material having ceramic-like properties and capable of absorbing X-radiation of 45-55 keV and hard radiation of 0.6-1.25 MeV, containing an inorganic filler and a cured synthetic resin, according to the present invention, per every 50 volume parts of phosphogypsum contains 38-71 volume parts of glass-form-ing oxides, 46-220 volume parts of a cured unsaturated polyester resin and up to 23 volume parts of acetone or styrene, while the glass-forming oxides include 81 % by weight of lead oxide, 11.5 % by weight of silicon dioxide and 2.6 % by weight of barium oxide.

The invention further relates to a process for preparing an expanded material having ceramic-like properties with completely closed pores by adding to an inorganic filler being bonded with a synthetic resin an expanding agent, **characterized in that** the process is carried out in several stages, wherein in a first stage waste phosphogysum is heated at a temperature not lower than 172° C for at least 1.3 hours, in a second stage 100 volume parts of said phosphogysum are mixed with 60-270 volume parts of an unsaturated polyester resin containing up to 8% by volume of, an accelerant such as cobalt naphthenate, and in a third step 3-25 volume parts of a curing agent, butyl isocyanate in an amount of up to 30% by volume and 0.05-0.25% by volume of water (based on phosphogypsum and polyester resin) as an expanding agent, are added.

According to a preferred embodiment of the process, prior to curing an organic dilutant such as acetone or styrene in an amount of up to 12 volume parts is added to maintain the composition viscosity at a level not higher than 4,050 mPa ∗ seconds.

Furthermore, it is preferred that the curing agent is a solution of 20-40% by volume of cyclohexanone peroxide or benzoyl peroxide in dibutyl phthalate.

The process for preparing materials having ceramic-like properties according to the present invention makes it possible to utilize postproduczion phosphogypsum which most often is a noxious waste for the natural environment, whereas the ceramic-like materials themselves, owing to their easy processability by injection moulding as well as by casting, and their good physico-chemical properties, can be used in many cases instead of metals or plastics. Due to their very good adhesion to metals, plastics, glass, wood or concrete. The ceramic-like materials can be readily bonded to these materials both before and after curing, using the prepolymerized composition as a binding agent. Moreover, articles made from the materials having ceramic-like properties according to this invention, after having been worn out in most cases can be reused as fillers after their previous disintegration, and thereby utilized again.

The present invention is further described by the following examples wthout limiting the invention.

### Example I

To 0.5 dm³ of an unsaturated polyester resin, 0.7 dm³ of a dry composition with a grain size up to 16 µm is added on continuous stirring, the said composition consisting of 60 % by volume of magnetite and 40 % by volume of a waste phosphogypsum (apatite derived), previously heated for 2.1 hours at a temperature of 217° C, then 0.001 dm³ of cobalt naphthenate, 0.165 dm³ of styrene and 0.03 dm³ of a 30 solution of benzoyl peroxide in dibutyl phthalate are added. The resultant composition is casted into prepared moulds in the shape of magnetic holders for bar soap.

### Example II

Proceeding as in example I and using a dry composition with a grain size of up to 10 µm, containing phosphogypsum and lead glass cullet in equal volume parts, a fluid composition is obtained which is used for coating cubes formed from ion-exchangers used out in installation for the concentration of radioactive effluents.

### Example III

1 dm³ of an unsaturated polyester resin is blended on continuous stirring with 1.4 dm³ of a waste phosphogypsum with a grain size of up to 12 µm, previously heated at a temperature of 237°C for 1.9 hours, 0.002 dm³ of cobalt naphthenate, 0.33 dm³ of acetone, 0.07 dm³ of a 30 % solution of cyclohexanone peroxide in dibutyl phthalate and 0.4 dm³ of butyl isocyanate and 0.03 dm³ of water. The resultant expanded composition is used to form profiles designed for the insulation of hulls of yachts and boats.

## Claims

1. A process for preparing a material having ceramic-like properties with magnetic properties by binding an inorganic filler with a synthetic resin in a non-aqueous system, **characterized in that** the process is carried out in several stages, wherein at the first stage waste phosphogypsum is heated at a temperature not lower than 177° C for at least 1 hour, and at the second stage, a physically homogenized dry composition with a grain size of up to 25µm is prepared from the waste phosphogypsum and magnetite in volume proportion 1:0.66-1:1.52, and then the resultant dry composition is blended on continuous stirring for 0.2-4.8 hours with unsaturated polyester resin in volume proportion 0.46:1-2.2:1 in relation to the dry composition, and up to 8 volume parts of an accelerant such as cobalt naphthenate per every 100 volume parts of resin is added, and at the third step the whole composition is cured by adding a curing agent in a quantity of 3-20 volume parts.

2. A process for preparing a material having ceramic-like properties and capable to absorb an X-radiation of 45-55keV and a hard radiation of 0.6-1.25MeV, by binding an inorganic filler with a synthetic resin in a non-aqueous system, **characterized in that** the process is carried out in several stages, wherein at the first stage waste phosphogypsum is heated at a temperature not lower than 177° C for at least 1.2 hours, and at the second stage, a physically homogenized dry composition with a grain size of up to 25µm is prepared from the waste phosphogypsum and glass-forming oxides in a volume proportion 1:0.76-1:1.42, said oxides including 81% by weight of lead oxide, 11.5% by weight of silicon dioxide and 2.6% by weight of barium oxide, and then the resultant dry composition is blended on continuous stirring for at least 10 minutes with unsaturated polyester resin in volume proportion 0.46:1-2.2:1 in relation to the dry composition, and up to 8 volume parts of an accelerant such as cobalt naphthenate per every 100 volume parts of resin is added, and at the third stage the whole composition is cured by adding a curing agent in a quantity of 3-20 volume parts.

3. A process for preparing an expanded material having ceramic-like properties with completely closed pores by adding to an inorganic filler being bonded with a synthetic resin an expanding agent, **characterized in that** the process is carried out in several stages, wherein in a first stage waste phosphogypsum is heated at a temperature not lower than 172° C for at least 1.3 hours, in a second stage 100 volume parts of said phosphogypsum are mixed with 60-270 volume parts of an unsaturated polyester resin containing up to 8% by volume of an accelerant such as cobalt naphthenate, and in a third step 3-25 volume parts of a curing agent as well as butyl isocyanate in an amount of up to 30% by volume and 0.05-0.25% by volume of water (based on phosphogypsum and polyester resin) as an expanding agent, are added.

4. A process according to any of claims 1-3, **characterized in that** the waste phosphogypsum used is derived from apatite.

5. A process according to claim 1 or claim 2 or claim 4 **characterized in that** to the composition prior to curing, up to 23 parts by volume of an organic diluent such as acetone or styrene are added to maintain the composition viscosity at a level not higher than 4230 mPa∗s.

6. A process according to any of claims 1-5, **characterized in that** the curing agent is a solution of 20-40% by volume of cyclohexanone peroxide or benzoyl peroxide in dibutyl phthalate.

7. A process according to claim 3, **characterized in that** prior to curing an organic diluent such as acetone or styrene in an amount of up to 12 volume parts is added to maintain the composition viscosity at a level not higher than 4050 mPa∗s.

8. A material having ceramic-like properties with magnetic properties, obtainable by the process according to claim 1, containing an inorganic filler, and a synthetic resin having been cured with a curing agent, **characterized in that** per every 100 parts by volume of phosphogypsum it contains 66-152 parts by volume of magnetite, 92-440 parts by volume of cured unsaturated polyester resin and up to 46 parts by volume of acetone or styrene.

9. A material having ceramic-like properties and capable of absorbing an X-radiation of 45-55 keV and hard radiation of 0.6-1.25 MeV, obtainable by the process according to claim 2, containing an inorganic filler and a synthetic resin having been cured with a curing agent, **characterized in that** per every 100 parts by volume of phosphogypsum it contains 76-142 parts by volume of glass forming oxides including 81% by weight of lead oxide, 11.5% by weight of silicon dioxide and 2.6% by weight of barium oxide, 92-440 parts by volume of cured unsaturated polyester resin and up to 46 parts by volume of acetone or styrene.

10. Use of a material according to claim 8, for producing articles having magnetic properties.

11. Use of a material according to claim 9, for producing articles such as plates, capable of absorbing an X-radiation of 45-55 keV and hard radiation of 0.6-1.25 MeV.

12. Use of a material according to one of claims 8 or 9 in the form of a prepolymerised composition as a binding agent.

13. Use of a material consisting of 0.5 parts by volume of an unsaturated polyester resin, 0.7 parts by volume of a composition consisting of 60 volume % of magnetite and 40 volume % of waste phosphogypsum 0.001 parts by volume of cobalt naphthenate, 0.165 parts by volume of styrene and 0.03 parts by volume of a 30 % solution of benzoyl peroxide in dibutyl phthalate for producing magnetic holders for bar soap.

14. Use of a material consisting of 0.5 parts by volume of unsaturated polyester resin, 0.7 parts by volume of a dry composition containing phosphogypsum and lead glass cullet in equal volume parts, 0.001 parts by volume of cobalt naphthenate, 0.165 parts by volume of styrene and 0.03 parts by volume of a 30 % solution of benzoyl peroxide in dibutyl phthalate for coating cubes formed from ion exchanges used in installation for the concentration of radioactive effluents.

15. Use of a material consisting of 1 parts by volume of unsaturated polyester resin, 1.4 parts by volume of a waste phosphogypsum, 0.002 parts by volume of cobalt naphthenate, 0.33 parts by volume of acetone, 0.07 parts by volume of a 30 % solution of cyclohexanone peroxide in dibutyl phthalate 0.4 parts by volume of butyl isocyanate and 0.03 parts by volume of water to form profiles designed for the insulation of hulls of yachts and boats.

## Patentansprüche

1. Verfahren zur Herstellung eines Materials mit Eigenschaften, welche denen einer Keramik ähnlich sind, mit magnetischen Eigenschaften, wobei ein anorganischer Füllstoff mit einem synthetischen Harz in einem nicht wässrigen System gebunden wird,
dadurch gekennzeichnet, daß
das Verfahren in mehreren Stufen durchgeführt wird, wobei in einer ersten Stufe Phosphogipsabfall bei einer Temperatur von nicht weniger als 177°C wenigstens eine Stunde erwärmt wird, und in einer zweiten Stufe eine physikalisch homogenisierte trockene Zusammensetzung mit einer Komgröße von bis zu 25 um aus dem Phosphogipsabfall und Magnetit in einem Volumenverhältnis von 1:0,66 - 1: 1,52 hergestellt wird, und anschließend die resultierende trockene Zusammensetzung unter kontinuierlichem Rühren für 0,2 - 4,8 Stunden mit ungesättigtem Polyesterharz in einem Volumenverhältnis von 0,46:1 - 2,2:1 in bezug auf die trockene Zusammensetzung vermischt wird, und wobei bis zu 8 Volumenteile eines Beschleunigers, wie Cobaltnaphthenat, pro 100 Volumenteile des Harzes zugegeben werden, und in einer dritten Stufe die ganze Zusammensetzung durch Zugabe eines Härtes in einer Menge von 3 - 20 Volumenteilen gehärtet wird.

2. Verfahren zur Herstellung eines Materials mit Eigenschaften, welche denen einer Keramik ähnlich sind, und welches geeignet ist eine Röntgenstrahlung von 45 - 55 keV und eine harte Strahlung von 0,6 - 1,25 MeV zu absorbieren, wobei ein anorganischer Füllstoff mit einem synthetischen Harz in einem nicht wässrigen System gebunden wird,
dadurch gekennzeichnet, daß das Verfahren in mehreren Stufen durchgeführt wird, wobei in einer ersten Stufe Phosphogipsabfall bei einer Temperatur von nicht weniger als 177°C wenigstens 1,2 Stunden erwärmt wird, und in einer zweiten Stufe eine physikalisch homogenisierte trockene Zusammensetzung mit einer Korngröße von bis zu 25 um aus dem Phosphogipsabfall und Glassbildneroxiden in einem Volumenverhältnis von 1:0,76 - 1:1,42 hergestellt wird, wobei diese Oxide 81 Gew.-% Bleioxid, 11,5 Gew.-% Siliziumdioxid und 2,6 Gew.-% Bariumoxid enthalten, und anschließend die resultierende trockene Zusammensetzung unter kontinuierlichem Rühren für wenigstens 10 Minuten mit ungesättigtem Polyesterharz in einem Volumenverhältnis von 0,46:1 - 2,2:1 in bezug auf die trockene Zusammensetzung vermischt wird, und wobei bis zu 8 Volumenteile eines Beschleuniges, wie Cobaltnaphthenat, pro 100 Volumenteile des Harzes zugegeben wird, und in einer dritten Stufe die ganze Zusammensetzung durch Zugabe eines Härtes in einer Menge von 3 - 20 Volumenteilen gehärtet wird.

3. Verfahren zur Herstellung eines geschäumten Materials mit Eigenschaften, welche denen einer Keramik ähnlich sind, mit vollständig geschlossenen Poren, wobei zu einem anorganischen Füllstoff, welcher mit einem synthetischen Harz gebunden ist, ein Schaummittel bzw. Treibmittel zugegeben wird,
dadurch gekennzeichnet, daß das Verfahren in mehreren Stufen durchgeführt wird, wobei in einer ersten Stufe Phosphogipsabfall bei einer Temperatur von nicht weniger als 172°C wenigstens 1,3 Stunden erwärmt wird, und in einer zweiten Stufe 100 Volumenteile des Phosphogipsabfalls mit 60 - 270 Volumenteilen eines ungesättigten Polyesterharzes enthaltend 8 Volumenteile eines Beschleuniges, wie Cobaltnaphthenat, vermischt werden, und in einer dritten Stufe 3-25 Volumenteile eines Härters und Butylisocyanat in einer Menge von bis zu 30 Volumen-% und 0,05 - 0,25 Volumen-% Wasser, bezogen auf Phoshpogips und Polyester zugegeben werden.

4. Verfahren nach einem der Ansprüche 1 - 3, dadurch gekennzeichnet, daß der verwendete Phosphogipsabfall aus Apatit hergeleitet wird.

5. Verahren nach Anspruch 1 oder Anspruch 2 oder Anspruch 4 , dadurch gekennzeichnet, daß vor dem Härten zu der Zusammensetzung bis zu 23 Volumenteile eines organischen Lösungsmittels, wie Aceton oder Styrol, hinzugefügt werden, um die Viskosität der Zusammensetzung auf einem Wert von nicht mehr als 4230 mPa*s zu halten.

6. Verfahren nach einem der Ansprüche 1 - 5, dadurch gekennzeichnet, daß der Härter eine Lösung aus 20 - 40 Vol.-% Cyclohexanonperoxid oder Benzoylperoxid in Dibutylphtalat ist.

7. Verfahren nach Anspruch 3, dadurch gekennzeichnet, daß vor dem Härten ein organisches Lösungsmittel, wie Aceton oder Styrol, in einer Menge von bis zu 12 Volumenteilen hinzugefügt wird, um die Viskosität der Zusammensetzung auf einem Wert von nicht mehr als 4050 mPa*s zu halten.

8. Material mit Eigenschaften, welche denen einer Keramik ähnlich sind, mit magnetischen Eigenschaften, welches durch das Verfahren nach Anspruch 1 erhalten werden kann, enthaltend einen anorganischen Füllstoff und ein synthetisches Harz,welches mit einem Härter gehärtet wurde, dadurch gekennzeichnet, daß das Material pro 100 Volumenteilen des Phosphogips 66 - 152 Volumenteile Magnetit, 92 - 440 Volumenteile gehärteten ungesättigten Polyesterharz und bis zu 46 Volumenteile Aceton oder Styrol enthält.

9. Material mit Eigenschaften, welche denen einer Keramik ähnlich sind, und welches geeignet ist eine Röntgenstrahlung von 45 - 55 keV und eine harte Strahlung von 0,6 - 1,25 MeV zu absorbieren, enthaltend einen anorganischer Füllstoff und ein synthetisches Harz, welches mit einem Härter gehärtet wurde, dadurch gekennzeichnet, daß das Material pro 100 Volumenteilen des Phosphogips 76 - 142 Volumenteile Glasbildneroxide, enthaltend 81 Gew.-% Bleioxid, 11,5 Gew.-% Siliziumdioxid und 2,6 Gew.-% Bariumoxid, 92 - 440 Volumenteile gehärteten ungesättigten Polyesterharz und bis zu 46 Volumenteile Aceton oder Styrol enthält.

10. Verwendung eines Materials nach Anspruch 8, zur Herstellung von Erzeugnissen mit magnetischen Eigenschaften.

11. Verwendung eines Materials nach Anspruch 9 zur Herstellung von Erzeugnissen wie Platten, welche geeignet sind eine Röntgenstrahlung von 45 - 55 keV und eine harte Strahlung von 0,6 - 1,25 MeV zu absorbieren.

12. Verwendung eines Materials nach einem der Ansprüche 8 oder 9 in der Form einer vorpolymerisierten Zusammensetzung als ein Bindemittel.

13. Verwendung eines Materials bestehend aus 0,5 Volumenteilen eines ungesättigten Polyesterharzes, 0,7 Volumenteilen einer Zusammensetzung bestehend aus 60 Vol.-% Magnetit und 40 Vol.-% Phosphogips, 0,001 Volumenteilen Cobaltnaphthenat, 0,165 Volumenteilen Styrol und 0,03 Volumenteilen einer 30 %-igen Lösung aus Benzoylperoxid in Dibutylphthalate um magnetische Halter für Seifen herzustellen.

14. Verwendung eines Materials bestehend aus 0,5 Volumenteilen eines ungesättigten Polyesterharzes, 0,7 Volumenteilen einer trockenen Zusammensetzung enthaltend Phosphogips und Bleiglasbruch in gleichen Volumenteilen, 0,001 Volumenteilen Cobaltnaphthenat, 0,165 Volumenteilen Styrol und 0,03 Volumenteilen einer 30 %-igen Lösung aus Benzoylperoxid in Dibutylphthalate um Würfel zu beschichten, geformt aus lonenaustauschern, welche bei der Installation zur Konzentration der radioaktiven Abwässer bzw Abgase eingesetzt werden.

15. Verwendung eines Materials bestehend aus 1 Volumenteil ungesättigtem Polyesterharz, 1,4 Volumenteilen Phosphogipsabfall, 0,002 Volumenteilen Cobaltnaphthenat, 0,33 Volumenteilen Aceton, 0,07 Volumenteilen einer 30 %-igen Lösung aus Benzoylperoxid in Dibutylphthalate, 0,4 Volumenteilen Butylisocyanat und 0,03 Volumenteilen Wasser, um Profile herzustellen, welche für die Isolierung von Schiffskörpern bzw. -rümpfen von Yachten und Booten geeignet sind.

## Revendications

1. Procédé pour préparer un matériau ayant des propriétés semblables à une céramique, ayant des propriétés magnétiques, en liant une charge inorganique avec une résine synthétique dans un système non aqueux, caractérisé en ce que le procédé est mis en oeuvre en plusieurs stades, dans lequel au premier stade du phosphogypse résiduaire est chauffé à une température non inférieure à 177 °C pendant au moins 1 heure, et au deuxième stade, une composition sèche physiquement homogénéisée ayant une taille de grain jusqu'à 25 µm est préparée à partir du phosphogypse résiduaire et de magnétite en une proportion en volume de 1:0,66 à 1:1,52, puis la composition sèche résultante est mélangée sous agitation continue pendant 0,2 à 4,8 heures avec une résine polyester insaturée en une proportion en volume de 0,46:1 à 2,2:1 par rapport à la composition sèche, et on ajoute jusqu'à 8 parties en volume d'un accélérateur tel que le naphténate de cobalt pour chaque 100 parties en volume de résine, et à la troisième étape, la composition totale est durcie en ajoutant un agent durcissant en une proportion de 3 à 20 parties en volume.

2. Procédé pour préparer un matériau ayant des propriétés semblables à une céramique et capable d'absorber un rayonnement X de 45 à 55 keV et un rayonnement dur de 0,6 à 1,25 MeV, en liant une charge inorganique avec une résine synthétique dans un système non aqueux, caractérisé en ce que le procédé est mis en oeuvre en plusieurs stades, dans lequel au premier stade, du phosphogypse résiduaire est chauffé à une température non inférieure à 177 °C pendant au moins 1,2 heure, et au deuxième stade, une composition sèche physiquement homogénéisée ayant une taille de grain jusqu'à 25 µm est préparée à partir du phosphogypse résiduaire et d'oxydes formant du verre en une proportion en volume de 1:0,76 à 1:1,42, lesdits oxydes incluant 81 % en poids d'oxyde de plomb, 11,5 % en poids de dioxyde de silicium et 2,6 % en poids d'oxyde de baryum, puis la composition sèche résultante est mélangée sous agitation continue pendant au moins 10 minutes avec une résine polyester insaturée en une proportion en volume de 0,46:1 à 2,2:1 en relation avec la composition sèche, et on ajoute jusqu'à 8 parties en volume d'un accélérateur tel que le naphténate de cobalt pour chaque 100 parties en volume de résine, et au troisième stade la composition totale est durcie en ajoutant un agent de durcissement en une proportion de 3 à 20 parties en volume.

3. Procédé pour préparer un matériau expansée ayant des propriétés semblables à une céramique avec des pores complètement fermés en ajoutant un agent d'expansion à une charge inorganique liée avec une résine synthétique, caractérisé en ce que le procédé est mis en oeuvre en plusieurs stades, dans lequel, dans un premier stade, du phosphogypse résiduaire est chauffé à une température non inférieure à 172 °C pendant au moins 1,3 heure, dans un deuxième stade 100 parties en volume dudit phosphogypse sont mélangées avec 60 à 270 parties en volume d'une résine polyester insaturée contenant jusqu'à 8 % en volume d'un accélérateur tel que le naphténate de cobalt, et dans une troisième étape on ajoute 3 à 25 parties en volume d'un agent durcissant ainsi que de l'isocyanate de butyle en une proportion allant jusqu'à 30 % en volume, et 0,05 à 0,25 % en volume d'eau (sur la base du phosphogypse et de la résine polyester), en tant qu'agent d'expansion.

4. Procédé selon l'une quelconque des revendications 1 à 3, caractérisé en ce que le phosphogypse résiduaire utilisé est dérivé d'apatite.

5. Procédé selon la revendication 1 ou la revendication 2 ou la revendication 4, caractérisé en ce que, avant le durcissement, on ajoute à la composition jusqu'à 23 parties en volume d'un diluant organique tel que l'acétone ou le styrène pour maintenir la viscosité de la composition à un niveau non supérieur à 4230 mPa*s.

6. Procédé selon l'une quelconque des revendications 1 à 5, caractérisé en ce que l'agent de durcissement est une solution de 20 à 40 % en volume de peroxyde de cyclohexanone ou de peroxyde de benzoyle dans du phtalate de dibutyle.

7. Procédé selon la revendication 3, caractérisé en ce que, avant le durcissement, un diluant organique tel que l'acétone ou le styrène est ajouté en une proportion allant jusqu'à 12 parties en volume pour maintenir la viscosité de la composition à un niveau non supérieur à 4050 mPa*s.

8. Matériau ayant des propriétés semblables à une céramique avec des propriétés magnétiques, pouvant être obtenue par le procédé selon la revendication 1, contenant une charge inorganique et une résine synthétique ayant été durcie avec un agent de durcissement, caractérisé en ce que pour chaque 100 parties en volume de phosphogypse, elle contient 66 à 152 parties en volume de magnétite, 92 à 440 parties en volume de résine polyester insaturée durcie et jusqu'à 46 parties en volume d'acétone ou de styrène.

9. Matériau ayant des propriétés semblables à une céramique et capable d'absorber un rayonnement X de 45 à 55 keV et un rayonnement dur de 0,6 à 1,25 MeV, pouvant être obtenue par le procédé selon la revendication 2, contenant une charge inorganique et une résine synthétique, ayant été durcie avec un agent de durcissement, caractérisé en ce que, pour chaque 100 parties en volume de phosphogypse, elle contient 76 à 142 parties en volume d'oxydes formant du verre incluant 81 % en poids d'oxyde de plomb, 11,5 % en poids de dioxyde de silicium et 2,6 % en poids d'oxyde de baryum, 92 à 440 parties en volume de résine polyester insaturée durcie et jusqu'à 46 parties en volume d'acétone ou de styrène.

10. Utilisation d'un matériau selon la revendication 8, pour produire des articles ayant des propriétés magnétiques.

11. Utilisation d'un matériau selon la revendication 9, pour produire des articles tels que des plaques, capable d'absorber un rayonnement X de 45 à 55 keV et un rayonnement dur de 0,6 à 1,25 MeV.

12. Utilisation d'un matériau selon l'une quelconque des revendications 8 ou 9, sous la forme d'une composition prépolymérisée en tant qu'agent liant.

13. Utilisation d'un matériau constitué par 0,5 partie en volume d'une résine polyester insaturée, 0,7 partie en volume d'une composition constituée par 60 % en volume de magnétite et 40 % en volume de phosphogypse résiduaire, 0,001 partie en volume de naphténate de cobalt, 0,165 partie en volume de styrène et 0,03 partie en volume d'une solution à 30 % de peroxyde de benzoyle dans du phtalate de dibutyle pour produire des supports magnétiques pour savon en barre.

14. Utilisation d'un matériau constitué par 0,5 partie en volume d'une résine polyester insaturée, 0,7 partie en volume d'une composition sèche contenant du phosphogypse et du groisil de verre au plomb en parties en volume égales, 0,001 partie en volume de naphténate de cobalt, 0,165 partie en volume de styrène et 0,03 partie en volume d'une solution à 30 % de peroxyde de benzoyle dans du phtalate de dibutyle pour revêtir des cubes formés à partir d'échangeurs d'ions utilisés dans une installation pour la concentration d'effluents radioactifs.

15. Utilisation d'un matériau constitué par 1 partie en volume de résine polyester insaturée, 1,4 partie en volume d'un phosphogypse résiduaire, 0,002 partie en volume de naphténate de cobalt, 0,33 partie en volume d'acétone, 0,07 partie en volume d'une solution à 30 % de peroxyde de cyclohexanone dans du phtalate de dibutyle, 0,4 partie en volume d'isocyanate de butyle et 0,03 partie en volume d'eau pour former des profils conçus pour l'isolation de coques de yachts et de bateaux.
